# EUROPEAN PATENT APPLICATION

(11) **EP 4 568 402 A1**
(43) Date of publication of application: **11.06.2025**
(21) Application number: 23849124.5
(22) Date of filing: 30.06.2023
(51) Int. Cl.: H04W 74/08

(54) **RANDOM ACCESS RESOURCE DETERMINING METHOD, TERMINAL, APPARATUS, AND STORAGE MEDIUM**

(30) Priority: 02.08.2022 CN 202210922818
(71) Applicant: Datang Mobile Communications Equipment Co., Ltd., Beijing 100085 (CN)
(72) Inventor: XING, Yanping, Beijing 100085 (CN); GAO, Xuejuan, Beijing 100085 (CN); FEI, Yongqiang, Beijing 100085 (CN)
(74) Representative: Studio Torta S.p.A.
(86) International application number: PCT/CN2023/104707
(87) International publication number: WO 2024/027414

(57) **Abstract**

Embodiments of the present application provide a random access resource determining method, a terminal, an apparatus, and a storage medium. The method comprises: determining a PRACH transmission frequency in the current random access attempt and a reference signal, determining a random access resource of the current random access attempt on the basis of the PRACH transmission frequency in the current random access attempt and the reference signal, and sending a PRACH of the current random access attempt on the random access resource.

## Description

### CROSS-REFERENCES TO RELATED APPLICATIONS

The present application claims priority to Chinese application No. 202210922818.3 filed on August 02, 2022, entitled "Random Access Resource Determining Method, Terminal, Apparatus, and Storage Medium", which is hereby incorporated by reference in its entirety.

### FIELD

The present application relates to the field of communications, and in particular, to a method and an apparatus for determining random access resource, a terminal, and a storage medium.

### BACKGROUND

A user equipment (UE) may perform multiple random access attempts during a random access (RA) procedure in long term evolution (LTE) and new radio (NR).

Although LTE supports transmission of multiple physical random access channels (PRACHs) in one random access attempt, a random access resource in LTE is not associated with a synchronization signal (SS)/physical broadcast channel (PBCH) block (SSB) and a channel state information reference signal (CSI-RS). In addition, determination of a quantity of PRACH transmissions in LTE is for terminals that are stationary or moving at a low speed. After the terminal determines an initial quantity of PRACH transmissions, a quantity of repetitions will only increase in subsequent random access attempts, which is not suitable for terminals moving at medium and high speeds.

After NR supports multiple PRACH transmissions, determination of the quantity of PRACH transmissions and a random access resource cannot directly follow the relevant solutions in the LTE.

### BRIEF SUMMARY

In response to problems in the related art, embodiments of the present application provide a method and an apparatus for determining random access resource, a terminal and a storage medium.

An embodiment of the present application provides a method for determining random access resource, including:
determining a quantity of physical random access channel (PRACH) transmissions and a reference signal for a current random access attempt; and
determining a random access resource for the current random access attempt based on the quantity of PRACH transmissions and the reference signal for the current random access attempt, and transmitting a PRACH in the current random access attempt on the random access resource.

In an embodiment, determining the quantity of PRACH transmissions for the current random access attempt includes:
determining a first quantity of PRACH transmissions before a first random access attempt, where the first quantity of PRACH transmissions is used for each random access attempt in a random access procedure; or
determining a second quantity of PRACH transmissions after a quantity of random access attempts reaches a first value, where the second quantity of PRACH transmissions is used for each random access attempt before next determination of a quantity of PRACH transmissions in the random access procedure; or
determining the first quantity of PRACH transmissions or the second quantity of PRACH transmissions as the quantity of PRACH transmissions for the current random access attempt.

In an embodiment, determining the reference signal for the current random access attempt includes:
determining a first reference signal before the first random access attempt, where the first reference signal is used for each random access attempt in a random access procedure; or
determining a second reference signal after the quantity of random access attempts reaches a second value, where the second reference signal is used for each random access attempt before next determination of a reference signal in the random access procedure;
determining the first reference signal or the second reference signal as the reference signal for the current random access attempt.

In an embodiment, determining the first quantity of PRACH transmissions includes:
determining the first quantity of PRACH transmissions based on a relationship between a signal measurement value and a threshold; or
determining the first quantity of PRACH transmissions based on indication information transmitted from a network device.

In an embodiment, the second quantity of PRACH transmissions is determined based on the following steps:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

In an embodiment, the predefined rule includes:
the second quantity of PRACH transmissions is a minimum value among all values in a set of quantity of PRACH transmissions that are greater than a quantity of PRACH transmissions corresponding to a previous random access attempt in the random access procedure.

In an embodiment, the first reference signal and the second reference signal are reference signals in a reference signal set.

In an embodiment, the reference signal set is determined before the first random access attempt, and the reference signal set is used for each random access attempt in the random access procedure.

In an embodiment, the reference signal set is determined after the quantity of random access attempts reaches a third value, and the reference signal set is used for each random access attempt before the reference signal set is determined next time in the random access procedure.

In an embodiment, the third value is the same as at least one of the first value or the second value.

In an embodiment, the reference signals in the reference signal set include:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
   reference signal received power;
   reference signal received quality;
   signal-to-noise ratio;
   signal-to-interference-plus-noise ratio; or
   received signal strength indication.

In an embodiment, the reference signal is one or more synchronization signal blocks, or one or more channel state information reference signals.

In an embodiment, the quantity of the reference signals is associated with whether a same beam is used for multiple PRACH transmissions in the current random access attempt.

An embodiment of the present application further provides a terminal, including a memory, a transceiver and a processor, where
the memory is used for storing a computer program; a transceiver is used for transmitting and receiving data under control of the processor; and the processor is used for reading the computer program in the memory and performing the method for determining random access resource described above.

An embodiment of the present application provides an apparatus for determining random access resource, including:
a first determining unit, used for determining a quantity of physical random access channel (PRACH) transmissions and a reference signal for a current random access attempt; and
a second determining unit, used for determining a random access resource for the current random access attempt based on the quantity of PRACH transmissions and the reference signal for the current random access attempt, and transmitting a PRACH in the current random access attempt on the random access resource.

In an embodiment, the first determining unit includes:
a first determining module, used for determining a first quantity of PRACH transmissions before a first random access attempt, where the first quantity of PRACH transmissions is used for each random access attempt in a random access procedure; or
a second determining module, used for determining a second quantity of PRACH transmissions after a quantity of random access attempts reaches a first value, where the second quantity of PRACH transmissions is used for each random access attempt before next determination of a quantity of PRACH transmissions in the random access procedure; or
a third determining module, used for determining the first quantity of PRACH transmissions or the second quantity of PRACH transmissions as the quantity of PRACH transmissions for the current random access attempt.

In an embodiment, the first determining unit includes:
a fourth determining module, used for determining a first reference signal before the first random access attempt, where the first reference signal is used for each random access attempt in a random access procedure; or
a fifth determining module, used for determining a second reference signal after the quantity of random access attempts reaches a second value, where the second reference signal is used for each random access attempt before next determination of a reference signal in the random access procedure;
a sixth determining module, used for determining the first reference signal or the second reference signal as the reference signal for the current random access attempt.

In an embodiment, the first determining module is used for:
determining the first quantity of PRACH transmissions based on a relationship between a signal measurement value and a threshold; or
determining the first quantity of PRACH transmissions based on indication information transmitted from a network device.

In an embodiment, the second determining module is used for:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

In an embodiment, the predefined rule includes:
the second quantity of PRACH transmissions is a minimum value among all values in a set of quantity of PRACH transmissions that are greater than a quantity of PRACH transmissions corresponding to a previous random access attempt in the random access procedure.

In an embodiment, the first reference signal and the second reference signal are reference signals in a reference signal set.

In an embodiment, the reference signal set is determined before the first random access attempt, and the reference signal set is used for each random access attempt in the random access procedure.

In an embodiment, the reference signal set is determined after the quantity of random access attempts reaches a third value, and the reference signal set is used for each random access attempt before the reference signal set is determined next time in the random access procedure.

In an embodiment, the third value is the same as at least one of the first value or the second value.

In an embodiment, the reference signals in the reference signal set include:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
   reference signal received power;
   reference signal received quality;
   signal-to-noise ratio;
   signal-to-interference-plus-noise ratio; or
   received signal strength indication.

In an embodiment, the reference signal is one or more synchronization signal blocks, or one or more channel state information reference signals.

In an embodiment, the quantity of the reference signals is associated with whether a same beam is used for multiple PRACH transmissions in the current random access attempt.

An embodiment of the present application further provides a processor-readable storage medium, where the processor-readable storage medium stores a computer program, and the computer program causes the processor to perform the method for determining random access resource described above.

An embodiment of the present application further provides a computer-readable storage medium, where the computer-readable storage medium stores a computer program, and the computer program causes a computer to perform the method for determining random access resource described above.

An embodiment of the present application further provides a communication device, where the communication device stores a computer program and the computer program causes the communication device to perform the method for determining random access resource described above.

An embodiment of the present application further provides a chip product, where the chip product stores a computer program and the computer program causes the chip product to perform the method for determining random access resource described above.

In the method and the apparatus for determining random access resource, the terminal, and the storage medium provided in the embodiment of the present application, the terminal determines the random access resource for the current random access attempt based on the quantity of PRACH transmissions and the reference signal for the current random access attempt by determining the quantity of PRACH transmissions and the reference signal for the current random access attempt, and transmits the PRACH in the current random access attempt on the random access resource, which clarifies a scheme of how to determine the random access resource after multiple PRACH transmissions are supported in NR, determines the quantity of PRACH transmissions and the reference signal for the current random access attempt during the random access procedure, and is more suitable for terminals moving at medium and high speeds.

### BRIEF DESCRIPTION OF THE DRAWINGS

To illustrate solutions in the embodiments of the present application more clearly, the drawings used in the descriptions of the embodiments will be briefly described below. The drawings in the following description are some embodiments of the present application, and other drawings may be obtained based on these drawings without any creative work for those skilled in the related art.
FIG. 1 is a schematic flowchart of a method for determining random access resource according to an embodiment of the present application;
FIG. 2 is a schematic structural diagram of a terminal according to an embodiment of the present application; and
FIG. 3 is a schematic flow chart of an apparatus for determining random access resource according to an embodiment of the present application.

### DETAILED DESCRIPTION

To describe solutions in the embodiments of the present application well, relevant knowledge will be introduced below.

In a random access procedure in long term evolution (LTE) and new radio (NR), the terminal may perform multiple random access attempts. For a random access attempt, in case that a random access response (RAR) is not successfully received, or a conflict resolution is unsuccessful, and a maximum quantity of attempts configured by the network side is not reached, the terminal may perform random access resource selection and transmission again.

### (1) Random access in LTE

In LTE, repeated transmission of preambles is supported, that is, in a random access attempt, a user equipment (UE) may repeatedly transmit preambles, and receive a random access response after the repeated transmission of preambles are completed. In LTE, the network side may configure up to three reference signal received power (RSRP) thresholds T*ᵢ* (*i* = 1, 2, 3), corresponding to three different coverage enhancement levels (CE levels) 1, 2 and 3 respectively. The network side configures a corresponding quantity of repetitions and a maximum quantity of attempts for each coverage enhancement level.

The UE determines an initial coverage enhancement level during initialization in a random access procedure. If the network side explicitly notifies the coverage enhancement level, the initial coverage enhancement level is determined based on the indication of the network side; otherwise, the initial coverage enhancement level is determined by comparing the measurement results of RSRP and other parameters with the corresponding thresholds. It is assumed that all three thresholds are configured.

If the RSRP measurement result is lower than T₃, the initial coverage enhancement level is CE level 3;
if the RSRP measurement result is greater than T₃ and lower than T₂, the initial coverage enhancement level is CE level 2;
if the RSRP measurement result is greater than T₂ and lower than T₁, the initial coverage enhancement level is CE level 1;
if the RSRP measurement result is greater than T₁, the initial coverage enhancement level is CE level 0.

The terminal starts random access attempts from the initial CE level. If a random access response (RAR) is not received successfully or the conflict is not resolved, and the maximum quantity of attempts corresponding to the CE level configured by the network side is not reached, the terminal may perform random access resource selection and transmission again. If the random access response is not received successfully or the conflict is not resolved, and the maximum quantity of attempts corresponding to the CE level configured by the network side is reached, the terminal performs the random access attempt from the next CE level, and so on.

### (2) Random access in NR

In NR, the selection of a random access resource is associated with synchronization signal (SS)/physical broadcast channel (PBCH) block (SSB) and/or channel state information (CSI)-reference signal (RS). In an embodiment, taking SSB for example, the network side may configure a reference signal receiving power (RSRP) threshold *rsrp-ThresholdSSB* for the SSB. In case that a synchronization signal reference signal received power (SS-RSRP) for at least one SSB is greater than this threshold, an SSB is selected from all SSBs having the SS-RSRP greater than the threshold, and a random access resource is selected based on the selected SSB and the association between the SSB and the random access resource.

Currently, NR does not support multiple transmissions of preambles, that is, the terminal will only transmit the preamble once in one random access attempt. In case that the NR supports multiple physical random access channel (PRACH) transmissions in one random access attempt, multiple PRACH transmissions may be performed using the same beam or different beams.

After NR supports multiple PRACH transmissions, if the determination of the quantity of PRACH transmissions and random access resources is directly based on relevant schemes in LTE, on the one hand, the random access resources in LTE are not associated with the SSB and the CSI-RS, and on the other hand, determination of a quantity of PRACH transmissions in the LTE is for terminals that are stationary or moving at a low speed. After the terminal determines an initial quantity of PRACH transmissions, a quantity of repetitions will only increase in subsequent random access attempts, which is not suitable for terminals moving at medium and high speeds.

In response to problems in the replated art, embodiments of the present application provides a method and an apparatus for determining random access resource, a terminal, and a storage medium, the terminal determines the random access resource for the current random access attempt based on the quantity of PRACH transmissions and the reference signal for the current random access attempt by determining the quantity of PRACH transmissions and the reference signal for the current random access attempt, and transmits the PRACH in the current random access attempt on the random access resource, which clarifies a scheme of how to determine the random access resource after multiple PRACH transmissions are supported in NR, determines the quantity of PRACH transmissions and the reference signal for the current random access attempt during the random access procedure, and is more suitable for terminals moving at medium and high speeds.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet wireless service (general packet radio service, GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a wireless connection function, or other processing device connected to a wireless modem. In different systems, the names of the terminal may be different. For example, in the 5G system, the terminal device may be called as user equipment (UE). A wireless terminal may communicate with one or more core networks (CN) via a radio access network (RAN), and the wireless terminal may be a mobile terminal, such as a mobile phone (or "cellular" phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session-initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device involved in the embodiments of the present application may be a base station, and the base station may include a plurality of cells providing services for the terminal. Depending on the specific application, the network side device may also be called an access point, or may be a device in the access network that communicates with wireless terminal through one or more sectors on the air interface, or other names. Network device can be used to exchange received air frames with Internet Protocol (IP) packets, and act as a router between radio terminal and the rest of the access network, and the rest of the access network can include an Internet protocol (IP) communication network. The network side devices may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network side device may include a centralized unit (CU) node and a distributed unit (DU) node, and the centralized unit and the distributed unit may also be geographically separated.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

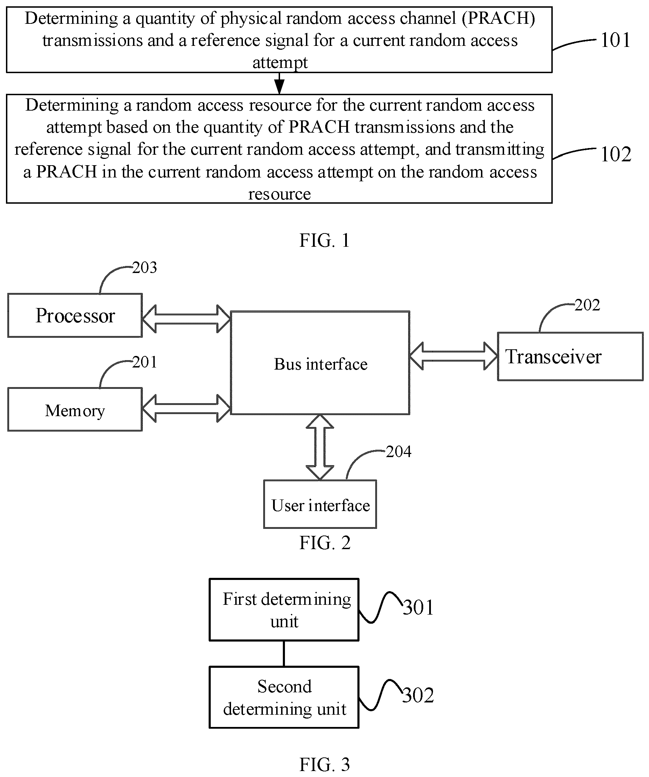

FIG. 1 is a first schematic flowchart of a method for determining random access resource according to an embodiment of the present application. As shown in FIG. 1, the method is performed by a terminal. The method includes at least the following steps.

Step 101: determining a quantity of physical random access channel (PRACH) transmissions and a reference signal for a current random access attempt.

In an embodiment, in NR, multiple PRACH transmissions in one random access (RA) attempt are supported. For each random access attempt in the random access procedure, the quantity of PRACH transmissions and a reference signal in the current random access attempt are determined. In an embodiment, for any random access attempt in the random access procedure, the quantity of PRACH transmissions may be one or more, and the reference signal may be one or more. When there are multiple reference signals, they may exist in a form of reference signal group.

Step 102: determining a random access resource for the current random access attempt based on the quantity of PRACH transmissions and the reference signal for the current random access attempt, and transmitting a PRACH in the current random access attempt on the random access resource.

In an embodiment, after the quantity of PRACH transmissions and the reference signal corresponding to the current random access attempt are determined, the random access resource for the current random access attempt is determined based on the quantity of PRACH transmissions and the reference signal corresponding to the current random access attempt, and the PRACH of the current random access attempt is transmitted on the determined random access resource. In case that the quantity of PRACH transmissions is multiple, the PRACH is transmitted multiple times on the determined random access resource.

In the method for determining random access resource provided in the embodiment of the present application, the terminal determines the random access resource for the current random access attempt based on the quantity of PRACH transmissions and the reference signal for the current random access attempt by determining the quantity of PRACH transmissions and the reference signal for the current random access attempt, and transmits the PRACH in the current random access attempt on the random access resource, which clarifies a scheme of how to determine the random access resource after multiple PRACH transmissions are supported in NR, determines the quantity of PRACH transmissions and the reference signal for the current random access attempt during the random access procedure, and is more suitable for terminals moving at medium and high speeds.

In an embodiment, the reference signal is one or more synchronization signal (SS) blocks, or one or more channel state information reference signals.

In an embodiment, the reference signal may be an SSB or a CSI-RS, and for one random access attempt, the reference signal corresponding to one random access attempt may be one or more. Further, for one random access attempt, the reference signal corresponding to one random access attempt may be one or more SSBs, or one or more CSI-RS.

In an embodiment, the quantity of the reference signals is associated with whether a same beam is used for multiple PRACH transmissions in the current random access attempt.

In an embodiment, for one random access attempt, the quantity of reference signals corresponding to it is associated with whether the same beam is used for multiple PRACH transmissions. In an embodiment, if multiple PRACH transmissions in a random access (RA) attempt use the same beam, the quantity of reference signals corresponding to the random access attempt may be one. In an embodiment, if multiple PRACH transmissions in a random access attempt use different beams, the quantity of reference signals corresponding to the random access attempt may be one or more.

For example, a group of reference signals is J SSBs or J CSI-RSs, J >= 1. If the same beam is used for transmission for one RA attempt, J = 1; if different beams are used for transmission for one RA attempt, J > 1, and the value of J is the quantity of SSBs or CSI-RSs corresponding to an RA attempt; if different beams are used for transmission for one RA attempt, J may also be 1.

In an embodiment, determining the quantity of PRACH transmissions for the current random access attempt includes:
determining a first quantity of PRACH transmissions before a first random access attempt, where the first quantity of PRACH transmissions is used for each random access attempt in a random access procedure; or
determining a second quantity of PRACH transmissions after a quantity of random access attempts reaches a first value, where the second quantity of PRACH transmissions is used for each random access attempt before next determination of a quantity of PRACH transmissions in the random access procedure; or
determining the first quantity of PRACH transmissions or the second quantity of PRACH transmissions as the quantity of PRACH transmissions for the current random access attempt.

In an embodiment, for the current random access attempt, determining the quantity of PRACH transmissions corresponding to the current random access attempt is divided into two following cases.

Case 1: a first quantity of PRACH transmissions is determined before a first random access attempt in the random access procedure, and the first quantity of PRACH transmissions is used for each random access attempt in the random access procedure. For the current random access attempt, the corresponding quantity of PRACH transmissions is the first quantity of PRACH transmissions.

Case 2: multiple PRACH transmission are determined during the random access procedure, and an occasion of each determination of the quantity of PRACH transmissions may be configured by the network side or predefined by the protocol. The second quantity of PRACH transmissions is determined after a quantity of random access attempts reaches a first value, and the second quantity of PRACH transmissions is used for each random access attempt before next determination of a quantity of PRACH transmissions in the random access procedure. The first value may be configured by the network side or predefined by the protocol.

Case 2 may be further divided into: the quantity of PRACH transmissions are re-determined based on a fixed number interval or a non-fixed number interval.

In an embodiment, during the random access procedure, the quantity of PRACH transmissions may be re-determined based on the fixed number interval of random access attempts. At this time, the first value may be a value.

For example, in case that the first value is 1, the terminal determines the quantity of PRACH transmissions before each random access attempt, and the determined quantity of PRACH transmissions are used for the current random access attempt. For example, in case that the first value is 2, it indicates that the terminal re-determines the quantity of PRACH transmissions once every two random access attempts, and the determined quantity of PRACH transmissions are used for two random access attempts. For another example, in case that the first value is 4, it indicates that the terminal re-determines the quantity of PRACH transmissions once every four random access attempts, and the determined quantity of PRACH transmissions are used for continuous four random access attempts.

In an embodiment, during the random access procedure, the quantity of PRACH transmissions may be re-determined based on the non-fixed number interval of random access attempts. In this case, the first value is a value in a group of values or a value set.

The first value may be used to indicate a quantity of random access attempts when the quantity of PRACH transmissions is determined during the random access procedure. For example, the network side may configure the UE to re-determine the quantity of PRACH transmissions before A1-st, A2-nd, and A3-rd random access attempts. The random access attempts in an interval [1, A1-1] correspond to the quantity of PRACH transmissions R1 determined before the first random access attempt; the random access attempts in an interval [A1, A2-1] correspond to the quantity of PRACH transmissions R2 determined before an A1-th random access attempt; the random access attempts in an interval [A2, A3-1] correspond to the quantity of PRACH transmissions R3 determined before an A2-nd random access attempt; and so on.

The first value may also indicate a maximum quantity of attempts corresponding to each determined quantity of PRACH transmissions. For example, the network side may configure a set {B1, B2, B3, B4} corresponding to the first value. For the quantity of PRACH transmissions determined before the first random access attempt, the terminal attempts at most B1 times. If the RAR is not successfully received, or the conflict resolution is unsuccessful and B1 is reached, the quantity of PRACH transmissions is re-determined and the quantity of attempts is at most B2 times, and so on. In this procedure, if the maximum quantity of random access attempts configured by the network side is reached, the random access procedure ends.

The first value may also correspond to a maximum quantity of attempts for different quantity of PRACH transmissions. For example, the network side may configure the first value corresponding to the quantity of PRACH transmissions R1 to be A1, the first value corresponding to the quantity of PRACH transmissions R2 to be A2, and the first value corresponding to the quantity of PRACH transmissions R3 to be A3. The UE determines the quantity of PRACH transmissions and determines the corresponding first value based on the determined quantity of PRACH transmissions. If the UE still fails after performing the RA attempt corresponding to the first value using the determined quantity of PRACH transmissions, the UE re-determines the quantity of PRACH transmissions.

In an embodiment, determining the first quantity of PRACH transmissions includes:
determining the first quantity of PRACH transmissions based on a relationship between a signal measurement value and a threshold; or
determining the first quantity of PRACH transmissions based on indication information transmitted from a network device.

In an embodiment: a first quantity of PRACH transmissions is determined before a first random access attempt in the random access procedure, and the first quantity of PRACH transmissions is used for each random access attempt in the random access procedure. Determining the first quantity of PRACH transmissions may include the following.
(1) The first quantity of PRACH transmissions is determined based on a relationship between a signal measurement value and a threshold.

The signal measurement value includes at least one of the following: RSRP; reference signal received quality (RSRQ); signal to noise ratio (SNR); signal-to-interference-plus-noise ratio (SINR); received signal strength indication (RSSI).

Taking RSRP for example, the terminal compares the signal measurement value with a threshold to determine the first quantity of PRACH transmissions.

For example, the protocol defines or the network side configures an RSRP threshold T₁ and two quantities of PRACH transmissions R1 and R2, where R1 < R2. The UE compares the RSRP measurement value with T₁. If the RSRP measurement value is greater than T₁ or greater than or equal to T₁, the first quantity of PRACH transmissions is determined to be R1 (the larger the RSRP value, the better the channel condition, and the smaller the corresponding quantity of PRACH transmissions). If the measurement value is less than T₁ or less than or equal to T₁, the first quantity of PRACH transmissions is determined to be R2.

The RSRP measurement value may be the RSRP of a downlink loss reference, a value of a specific SS-RSRP among multiple SS-RSRPs, or a value of a specific CSI-RSRP among multiple CSI-RSRPs, an average value of multiple SS-RSRPs, or an average value of multiple CSI-RSRPs, etc. The specific SS-RSRP among multiple SS-RSRPs may be an SS-RSRP with the highest RSRP value among multiple SS-RSRPs, an SS-RSRP selected by the UE, or an SS-RSRP corresponding to an SSB determined by the UE. A specific CSI-RSRP among multiple CSI-RSRPs may be a CSI-RSRP with the highest RSRP value among multiple CSI-RSRPs, a CSI-RSRP selected by the UE, or a CSI-RSRP corresponding to a CSI-RS determined by the UE.

In an embodiment, if there are multiple RSRP measurement values, and any measurement value is greater than T₁ or greater than or equal to T₁, the first quantity of PRACH transmissions is determined to be R1; if all measurement values are less than T₁ or less than or equal to T₁, the first quantity of PRACH transmissions is determined to be R2. The RSRP measurement value may be the SS-RSRP corresponding to different SSBs or the CSI-RSRP corresponding to different CSI-RSs, etc.

For another example, the protocol defines or the network side configures two RSRP thresholds T₁ and T₂ and three quantities of PRACH transmissions R1, R2 and R3, where T₁ > T₂, R1 < R2 < R3. If the measurement value is greater than T₁ or greater than or equal to T₁, the first quantity of PRACH transmissions is determined to be R1. If the measurement value is within the range of T₁ and T₂ (including or excluding T₁ and T₂), the first quantity of PRACH transmissions is determined to be R2. If the measurement value is less than or less than or equal to T₂, the first quantity of PRACH transmissions is determined to be R3.

The RSRP measurement value may be the RSRP of a downlink loss reference, a value of a specific SS-RSRP among multiple SS-RSRPs, or a value of a specific CSI-RSRP among multiple CSI-RSRPs, an average value of multiple SS-RSRPs, or an average value of multiple CSI-RSRPs, etc. The specific SS-RSRP among multiple SS-RSRPs may be an SS-RSRP with the highest RSRP value among multiple SS-RSRPs, an SS-RSRP selected by the UE, or an SS-RSRP corresponding to an SSB determined by the UE. A specific CSI-RSRP among multiple CSI-RSRPs may be a CSI-RSRP with the highest RSRP value among multiple CSI-RSRPs, a CSI-RSRP selected by the UE, or a CSI-RSRP corresponding to a CSI-RS determined by the UE.

In an embodiment, if there are multiple RSRP measurement values, and any measurement value is greater than T₁ or greater than or equal to T₁, the first quantity of PRACH transmissions is determined to be R1. If no measurement value is greater than T₁ or greater than or equal to T₁ and a measurement value is greater than T₂ or greater than or equal to T₂, the first quantity of PRA CH transmissions is determined to be R2. If no measurement value is greater than T₂ or greater than or equal to T₂ (that is, all measurement values are less than or less than or equal to T₂), the first quantity of PRACH transmissions is determined to be R3.

(2) The first quantity of PRACH transmissions is determined based on indication information transmitted from the network device. The network side may further directly indicate the first quantity of PRACH transmissions.

In an embodiment, the second quantity of PRACH transmissions is determined based on the following steps:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

In an embodiment, in one random access procedure, the quantity of PRACH transmissions may be repeatedly determined before multiple random access attempts. Determining the second quantity of PRACH transmissions corresponding to the current random access attempt may include:
(1) determining the second quantity of PRACH transmissions based on a relationship between a signal measurement value and a threshold.

The signal measurement value includes at least one of the following: RSRP, RSRQ, SNR, SINR, RSSI, etc. The second quantity of PRACH transmissions is determined based on a relationship between the signal measurement value and the threshold. The specific determination procedure may refer to steps of determining the first quantity of PRACH transmissions based on the relationship between the signal measurement value and the threshold.

For example, the network side notifies two RSRP thresholds T₁ and T₂, and three PRACH transmission times R1, R2 and R3, where T₁ > T₂, R1 < R2 < R3.

Before the first RA attempt in the RA procedure, the terminal determines the second quantity of PRACH transmissions based on the indication of the network side or the relationship between the signal measurement value and the threshold. It is assumed the second quantity of PRACH transmissions is R1, and a maximum quantity of attempts corresponding to the second quantity of PRACH transmissions is A1. If the terminal still fails after performs A1 RA attempts using the quantity of PRACH transmissions R1, the second quantity of PRACH transmissions is re-determined based on the relationship between the signal measurement value and the threshold. Assuming the second quantity of PRACH transmissions is R3, and the maximum quantity of attempts corresponding to the second quantity of PRACH transmissions is A3. The terminal performs subsequent PRACH transmissions using the quantity of PRACH transmissions R3 until the maximum quantity of attempts A3 is reached.

(2) The second quantity of PRACH transmissions is determined based on indication information transmitted from the network device. The network side may directly indicate the second quantity of PRACH transmissions.

(3) The second quantity of PRACH transmissions is determined based on a predefined rule. The predefined rule may be configured by the network side or predefined by the protocol.

In an embodiment, the predefined rule includes:
the second quantity of PRACH transmissions is a minimum value among all values in a set of quantity of PRACH transmissions that are greater than a quantity of PRACH transmissions corresponding to a previous random access attempt in the random access procedure.

In an embodiment, the second quantity of PRACH transmissions is determined based on a predefined rule, and the predefined rule may be:
the second quantity of PRACH transmissions is a minimum value among all values in a set of quantity of PRACH transmissions that are greater than a quantity of PRACH transmissions corresponding to a previous random access attempt in the random access procedure.

For one random access procedure, quantity of PRACH transmissions corresponding to all possible random access attempts constitute a set of quantity of PRACH transmissions, and the quantity of PRACH transmissions corresponding to different random access attempts are arranged in non-descending order. For any random access attempt in the random access procedure, the corresponding quantity of PRACH transmissions is greater than or equal to the quantity of PRACH transmissions corresponding to the previous random access attempt. Each re-determined quantity of PRACH transmissions is arranged in ascending order in the random access procedure.

For example, the network side notifies two RSRP thresholds T₁ and T₂, and three PRACH transmission times R1, R2 and R3, where T₁ > T₂, R1 < R2 < R3.

Before the first RA attempt in the RA procedure, the terminal determines the second quantity of PRACH transmissions based on the indication of the network side or the relationship between the signal measurement value and the threshold. It is assumed that the second quantity of PRACH transmissions is R1, and a maximum quantity of attempts corresponding to the second quantity of PRACH transmissions is A1. If the terminal performs A1 RA attempts using the quantity of PRACH transmissions R1 and still fails, the second quantity of PRACH transmissions is re-determined, and the re-determined second quantity of PRACH transmissions is a second highest value among the quantity of PRACH transmissions configured by the network side that is greater than the current quantity of PRACH transmissions. That is, the quantity of PRACH transmissions re-determined by the UE is R2, and the corresponding maximum quantity of attempts is A2. If the terminal performs A2 RA attempts using the quantity of PRACH transmissions R2 and still fails, the second quantity of PRACH transmissions is re-determined, and the re-determined second quantity of PRACH transmissions is a second highest value among the quantity of PRACH transmissions configured by the network side that is greater than the current quantity of PRACH transmissions. That is, the quantity of PRACH transmissions re-determined by the UE is R3, and the corresponding maximum quantity of attempts is A3. If the UE perform A3 RA attempts using the transmission number R3 and still fails, the RA procedure ends. In an embodiment, the network side may also configure a maximum quantity of attempts A' separately. In the above procedure, each RA attempt is considered, and if the maximum quantity of attempts A' is reached, the RA procedure ends.

For example, it is assumed that the network side configures three quantity of PRACH transmissions R1, R2, and R3, where R1 < R2 < R3. If the quantity of PRACH transmissions determined by the terminal before the first RA attempt is R2, then after the specified quantity of attempts interval is reached, the quantity of PRACH transmissions are re-determined to be R3.

For another example, before the first RA attempt in the RA procedure, the terminal determines the second quantity of PRACH transmissions, which is assumed to be R1, and the corresponding maximum quantity of attempts is A1. If the terminal performs A1 RA attempts using the quantity of PRACH transmissions R1 and still fails, the second quantity of PRACH transmissions is re-determined, and the re-determined second quantity of PRACH transmissions is a second highest value among the quantity of PRACH transmissions configured by the network side that is greater than the current quantity of PRACH transmissions. That is, the quantity of PRACH transmissions re-determined by the UE is R2, and the corresponding maximum quantity of attempts is A2. If the terminal performs A2 RA attempts using the quantity of PRACH transmissions R2 and still fails, the second quantity of PRACH transmissions is re-determined, and the re-determined second quantity of PRACH transmissions is a second highest value among the quantity of PRACH transmissions configured by the network side that is greater than the current quantity of PRACH transmissions. That is, the quantity of PRACH transmissions re-determined by the UE is R3, and the corresponding maximum quantity of attempts is A3. If the UE perform A3 RA attempts using the transmission number R3 and still fails, the RA procedure ends. In an embodiment, the network side may also configure a maximum quantity of attempts A' separately. In the above procedure, each RA attempt is considered. If the maximum quantity of attempts A' is reached, the RA procedure ends.

In the method for determining random access resource provided in the embodiment of the present application, the terminal clarifies the relevant solution for determining the quantity of PRACH transmissions for the current random access attempt, which further clarifies the solution for determining the random access resource after supporting multiple PRACH transmissions in NR, determines the quantity of PRACH transmissions and the reference signal for the current random access attempt during the random access procedure, and is more suitable for terminals moving at medium and high speeds.

In an embodiment, determining the reference signal for the current random access attempt includes:
determining a first reference signal before a first random access attempt, where the first reference signal is used for each random access attempt in a random access procedure; or
determining a second reference signal after a quantity of random access attempts reaches a second value, where the second reference signal is used for each random access attempt before next determination of a reference signal in the random access procedure; or
determining the first reference signal or the second reference signal as the reference signal for the current random access attempt.

In an embodiment, for the current random access attempt, determining corresponding reference signal is similar to determining the quantity of PRACH transmissions, and is divided into two following cases.

Case 1: a first reference signal is determined before a first random access attempt in the random access procedure, and the first reference signal is used for each random access attempt in the random access procedure. For the current random access attempt, the corresponding reference signal is the first reference signal.

Case 2: Multiple reference signals are determined during the random access procedure, and an occasion of each determination of the reference signals may be configured by the network side or predefined by the protocol. A second reference signal is determined after the quantity of random access attempts reaches a second value, and the second reference signal is used for each random access attempt before next determination of a reference signal in the random access procedure. The second value may be configured by the network side or predefined by the protocol.

Case 2 may be further divided into: the reference signals are re-determined based on a fixed number interval or a non-fixed number interval.

In an embodiment, during the random access procedure, the reference signals may be re-determined based on the fixed number interval of random access attempts. At this time, the second value may be a value.

For example, in case that the second value is 1, the terminal determines the reference signals before each random access attempt, and the determined reference signals are used for the current random access attempt. For example, in case that the second value is 2, it indicates that the terminal re-determines the reference signals once every two random access attempts, and the determined reference signals will be used for two random access attempts. For another example, in case that the first value is 4, it indicates that the terminal re-determines the reference signals once every four random access attempts, and the determined reference signals will be used for continuous four random access attempts.

In an embodiment, during the random access procedure, the reference signals may be re-determined based on the non-fixed number interval of random access attempts. In this case, the second value is a value in a group of values or a value set.

The second value may be used to indicate a quantity of random access attempts when the reference signal is determined during the random access procedure. For example, the network side may configure the UE to re-determine the reference signal before A1-st, A2-nd, and A3-rd random access attempts. The random access attempts in an interval [1, A1-1] correspond to the reference signal R1 determined before the first random access attempt; the random access attempts in an interval [A1, A2-1] correspond to the reference signal R2 determined before the A1-th random access attempt; the random access attempts in an interval [A2, A3-1] correspond to the reference signal R3 determined before the A2-nd random access attempt; and so on.

The second value may indicate a maximum quantity of attempts corresponding to each determined reference signal. For example, the network side may configure a set {B1, B2, B3, B4} corresponding to the second value. For the reference signal determined before the first random access attempt, the terminal attempts at most B1 times. If the RAR is not successfully received, or the conflict resolution is unsuccessful and B1 number is reached, the reference signal is re-determined and the quantity of attempts is at most B2 number, and so on. In this procedure, if the maximum quantity of random access attempts configured by the network side is reached, the random access procedure ends.

The second value may also correspond to a maximum quantity of attempts for different quantity of reference signals. For example, the network side may configure the second value corresponding to the reference signal R1 to be A1, the second value corresponding to the reference signal R2 to be A2, and the second value corresponding to the reference signal R3 to be A3. The UE determines the reference signal and determines the corresponding second value based on the determined reference signal. If the UE still fails after performing the RA attempt corresponding to the second value using the determined reference signal, the UE re-determines the reference signal.

During the random access procedure, the procedure of determining the reference signal for the random access attempt is similar to the procedure of determining the quantity of PRACH transmissions for the random access attempt. An occasion of determining the reference signal for the random access attempt may be the same as or different from the occasion of determining the quantity of PRACH transmissions for the random access attempt. If the occasions of determining the quantity of PRACH transmissions and the reference signal are the same, both the first value and the second value are the same. If the occasions of determining the quantity of PRACH transmissions and the reference signal are independent from each other, both the first value and the second value are also independent from each other and have no correlation with each other.

For example, both the first value and the second value may be 1, the UE determines the quantity of PRACH transmissions and a group of SSBs or CSI-RSs before each RA attempt, and the determined quantity of PRACH transmissions and group of SSBs or CSI-RSs are used for the RA attempt. For another example, the first value is a group of values associated with the quantity of PRACH transmissions. It is assumed that the network side configures the first value corresponding to the quantity of PRACH transmissions R1 to be A1, and a first value corresponding to the quantity of PRACH transmissions R2 to be A2. The second value is fixed to 1, the UE determines a group of SSBs or CSI-RSs for the RA attempt before each RA attempt, and redetermines the quantity of PRACH transmissions when the quantity of attempts reaches the first value corresponding to the quantity of PRACH transmissions. For another example, the first value and the second value are a group of same values associated with the quantity of PRACH transmissions. It is assumed that the network side configures a value corresponding to the quantity of PRACH transmissions R1 to be A1, and the value corresponding to the quantity of PRACH transmissions R2 to be A2, which are applicable to both the first value and the second value, the UE determines the quantity of PRACH transmissions and a set of SSBs or CSI-RSs for subsequent RA attempts before the first RA attempt and when the value is reached.

In the method for determining random access resource provided in the embodiment of the present application, the terminal clarifies the relevant solution for determining the reference signal for the current random access attempt, which further clarifies the solution for determining the random access resource after supporting multiple PRACH transmissions in NR, determines the quantity of PRACH transmissions and the reference signal for the current random access attempt during the random access procedure, and is more suitable for terminals moving at medium and high speeds.

In an embodiment, the first reference signal and the second reference signal are reference signals in a reference signal set.

In an embodiment, for the current random access attempt, the corresponding reference signal is a reference signal in a reference signal set. The quantity of reference signals is one or more. During the random access procedure, a reference signal set may be determined first, and a reference signal may be selected from the reference signal set corresponding to the current random access attempt. The reference signal set may be all SSBs or CSI-RSs configured by the network side, such as the SSB set notified in the broadcast, or CSI-RS set configured for the UE.

In an embodiment, the reference signal set is determined before the first random access attempt, and the reference signal set is used for each random access attempt in the random access procedure.

In an embodiment, a reference signal set may be determined before the first random access attempt, and the reference signal set is applicable to the entire random access procedure.

In an embodiment, the reference signal set is determined after a quantity of random access attempts reaches a third value, and the reference signal set is used for each random access attempt before the reference signal set is determined next time in the random access procedure.

In an embodiment, reference signal sets are determined multiple times during the random access procedure. The occasion of each determination of the reference signal set may be configured by the network side or predefined by the protocol. A reference signal set is determined after a quantity of random access attempts reaches a third value, and the reference signal set is used for each random access attempt before next determination of a reference signal set in the random access procedure. The third value may be configured by the network side or predefined by the protocol.

Further, an occasion of determining the reference signal set may be the same as or different from an occasion of determining the reference signal for the random access attempt and the occasion of determining the quantity of PRACH transmissions for the random access attempt.

In an embodiment, the third value is the same as at least one of the first value or the second value.

In an embodiment, the third value is the same as the first value, indicating that the occasion of determining the reference signal set is the same as the occasion of determining the quantity of PRACH transmissions. The third value is the same as the second value, indicating that the occasion of determining the reference signal set is the same as the occasion of determining the reference signal.

The first value, the second value, and the third value are the same. It indicates that the occasion of determining the reference signal for the random access attempt and the occasion of determining the quantity of PRACH transmissions for the random access attempt are exactly the same as the occasion of determining the reference signal set. For example, in case that the quantity of attempts reaches the first value, the SSB set, the SSB, and the quantity of PRACH transmissions are determined, and the determined SSB is included in the determined SSB set.

In an embodiment, at least two of the first value, the second value, or the third value are the same, which indicates that at least two of the occasion of determining the reference signal for the random access attempt, the occasion of determining the quantity of PRACH transmissions for the random access attempt, and the occasion of determining the reference signal set are the same. For example, the UE determines the SSB set before the first RA attempt, and the UE determines an SSB and the quantity of PRACH transmissions before the first RA attempt. The SSB is one SSB in the SSB set, and the SSB and the quantity of PRACH transmissions are used for subsequent RA attempts until the quantity of attempts to determine the reference signal and the quantity of PRACH transmissions is reached next time. In case that the quantity of RA attempts reaches the quantity of attempts to determine the reference signal and the quantity of PRACH transmissions next time, the UE redetermines the SSB and the quantity of PRACH transmissions, and the redetermined SSB is included in the SSB set determined before the first RA attempt.

In an embodiment, the first value, the second value, and the third value are independent from each other, which indicates that all the occasion of determining the reference signal for the random access attempt, the occasion of determining the quantity of PRACH transmissions for the random access attempt, and the occasion of determining the reference signal set are different and independent from each other. The occasion of determining the reference signal for the random access attempt and the occasion of determining the reference signal set being independently of each other is described. For example, the SSB set determined before the first RA attempt includes {SSB1, SSB3, SSB4, SSB5}, and one SSB is selected from the SSB set before each RA attempt. The selection rule may be selected by the UE itself in a descending order of RSRP values from a previously unselected SSB subset. For example, the UE determines the SSB set before the first RA attempt, and the UE determines an SSB when the quantity of attempts reaches a second value, and the determined SSB is included in the SSB set determined before the first RA attempt. For example, the UE determines the SSB set in case that the quantity of attempts reaches a third value, and the UE determines an SSB in case that the quantity of attempts reaches a second value, and the SSB determined in each attempt is included in the most recently determined SSB set.

In an embodiment, the reference signals in the reference signal set include:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
   reference signal received power;
   reference signal received quality;
   signal-to-noise ratio;
   signal-to-interference-plus-noise ratio; or
   received signal strength indication.

In an embodiment, the signal measurement value includes at least one of the following: RSRP, RSRQ, SNR, SINR, RSSI, etc. Explanation is made by taking the signal measurement value to be RSRP and the reference signal to be SSB for example.

The reference signals determined from the reference signal set may In an embodiment include the following.
(1) N reference signals with a highest signal measurement value, where N is a predefined or preconfigured positive integer. The larger the signal measurement value is, the better the channel condition and the smaller the corresponding quantity of PRACH transmissions are.
   The reference signal in the reference signal set is one or more SSBs with the highest SS-RSRP value. For example, the network side may also configure a threshold K. In case that a quantity of SSBs in the determined SSB set exceeds K, the K SSBs with the highest SS-RSRP are selected from the determined SSB set.
(2) All or part of reference signals having signal measurement values within a signal measurement value range corresponding to the quantity of PRACH transmissions.
   The SSBs in the reference signal set are all or part of the SSBs having SS-RSRP values within the RSRP range corresponding to the quantity of PRACH transmissions. For example, the protocol defines or the network side configures two RSRP thresholds T₁ and T₂, and three quantity of PRACH transmissions R1, R2 and R3. The quantity of PRACH transmissions determined by the UE before the first RA attempt are R2, then the SSB set includes all SSBs having SS-RSRP values within the range of T₁ and T₂ (including or excluding T₁, T₂).
(3) All or part of the reference signals having signal measurement values greater than a threshold.

The SSBs in the reference signal set are all or part of the SSBs having SS-RSRP greater than the threshold.

For example, the network configures different RSRP thresholds T_{SSB,i} for different quantity of PRACH transmissions (T_{SSB,1} corresponds to the quantity of PRACH transmissions R1, T_{SSB,2} corresponds to the quantity of PRACH transmissions R2), and the UE further selects SSBs having RSRP greater than the corresponding RSRP threshold T_{SSB,i} from the SSB set determined by the RSRP range corresponding to the quantity of PRACH transmissions. Alternatively, the SSBs in the set are all SSBs having SS-RSRP greater than the threshold notified by the network side, and the threshold may be the same value or different values for different quantity of PRACH transmissions.

For example, the network side configures an RSRP threshold T_{SSB}, then the SSB set includes all SSBs having SS-RSRP greater than or equal to T_{SSB}, or the network side configures different RSRP thresholds T_{SSB,i} for different quantity of PRACH transmissions (T_{SSB,1} corresponds to quantity of PRACH transmissions R1, T_{SSB,2} corresponds to quantity of PRACH transmissions R2), and the quantity of PRACH transmissions determined by the UE before the first RA attempt are R2, then the SSB set includes all SSBs having SS-RSRP greater than or equal to T_{SSB,2}. Furthermore, the network side may also configure a quantity K. In case that the quantity of SSBs in the determined SSB set exceeds K, the K SSBs with the highest SS-RSRP are selected.

In the method for determining random access resource provided in the embodiment of the present application, the terminal clarifies the relevant solution for determining the reference signal for the current random access attempt and the reference signal set where the reference signal is located, which further clarifies the solution for determining the random access resource after supporting multiple PRACH transmissions in NR, determines the quantity of PRACH transmissions and the reference signal for the current random access attempt during the random access procedure, and is more suitable for terminals moving at medium and high speeds.

The solutions of the embodiments of the present application are further introduced below through several specific examples.

### Example 1

Before the first RA attempt in an RA procedure, for example, during the RA procedure initialization and/or random access resource selection procedure, the UE determines a quantity of PRACH transmissions and a reference signal, and both the quantity of PRACH transmissions and the reference signal are used for each RA attempt in the RA procedure. The reference signal is SSB or CSI-RS.

The network side notifies two RSRP thresholds T₁ = 0 dBm and T₂ = -10 dBm for determining the quantity of PRACH repetitions, and configures three quantity of PRACH transmissions, R1 = 1, R2 = 2 and R3 = 4.

If the network side notifies a specific quantity of repetitions, the UE determines the quantity of PRACH repetitions to be the quantity notified by the network side; otherwise, the UE determines the quantity of PRACH repetitions based on the RSRP measurement results. Taking SSB for example, it is assumed that the SS-RSRP corresponding to SSB1, SSB2, SSB3 and SSB4 are -15 dBm, -8 dBm, -7 dBm, and -13 dBm respectively, and the RSRP of a downlink loss reference is -7 dBm. Based on the RSRP referenced by the downlink path loss, the maximum value of SS-RSRP or multiple SS-RSRP values, the measurement values are within the range of T₁ and T₂, the UE determines the quantity of PRACH repetitions to R2 = 2.

The UE determines an SSB, which is one of the following SSB sets: the N SSBs with the highest RSRP values; or all or part of the SSBs having RSRP within the RSRP range corresponding to the quantity of PRACH repetitions; or all or part of the SSBs having RSRP greater than the threshold notified by the network side.

It is assumed N = 1, the UE determines that the SSB is SSB3. It is assumed N=2 or the SSB set is all SSBs within the RSRP range (within T₁ and T₂) corresponding to the quantity of PRACH repetitions for SS-RSRP, the SSB set is { SSB2, SSB3}. It is assumed the RSRP threshold T_{SSB} for SSB selection = 2 dBm, the SSB set is empty because no SS-RSRP exceeds the threshold. It is assumed that the RSRP threshold for SSB selection is associated with the quantity of PRACH transmissions, the RSRP threshold T_{SSB} for SSB selection corresponding to quantity of transmission R1, R2, and R3 is {2 dBm, -8 dBm, -18 dBm}, the UE determines that the SSB set is SSB3 with SS-RSRP exceeding -8 dBm. If the SSB set contains multiple SSBs, and the UE selects one SSB from the SSB set. If the SSB set is empty, the UE selects one SSB from all SSBs.

Alternatively, the UE first determines an SSB, such as an SSB among the N SSBs with the highest RSRP values or an SSB among all or part of the SSBs having RSRP greater than the threshold notified by the network side. The UE determines the quantity of PRACH transmissions based on the comparison between the SS-RSRP corresponding to the SSB and thresholds T₁, T₂.

The quantity of PRACH repetitions and SSB determined by the UE in the above ways are used for each RA attempt in the entire RA procedure until the RA attempt succeeds or the maximum quantity of attempts configured by the network side is reached.

### Example 2

Before the first RA attempt in an RA procedure, for example, during the RA initialization procedure and/or random access resource selection procedure, the UE determines SSB or CSI-RS, and both the SSB or the CSI-RS are used for each RA attempt in the RA procedure. The UE determines the quantity of PRACH transmissions before the first RA attempt and after the quantity of RA attempts reaches the first value, and the quantity of PRACH transmissi' 11ons is applicable to the next RA attempt before the quantity of PRACH transmissions is determined. The method for determining SSB or CSI-RS may refer to Example 1.

Before the first RA attempt, the UE determines the quantity of PRACH transmissions using the same method as in Example 1. It is assumed that the determined quantity of PRACH transmissions R2 is 2, and the maximum quantity of attempts configured on the network side is 4.

The network side configures or protocol agrees that the UE determines the quantity of PRACH transmissions before each RA attempt. If the first RA attempt fails, the UE re-determines the quantity of PRACH transmissions. If the RA attempt fails again, the UE re-determines the quantity of PRACH transmissions again until the RA attempt succeeds or the maximum quantity of attempts configured on the network side is reached. UE may re-determine the quantity of PRACH transmissions each time based on notification of the network side, the comparison of the measurement value with the threshold, or ascending of the previous quantity of PRACH transmissions. For example, after the UE fails in the first RA attempt with the quantity of transmissions R2 = 2, the UE re-determines that the quantity of PRACH transmissions is still R2 based on the comparison of the measurement value with the threshold, and the UE fails in the second RA attempt with the quantity of transmissions R2 = 2. The UE performs a maximum of 4 RA attempts, and if the RA attempt still fails, the RA procedure ends. For another example, after the UE fails in the first RA attempt with the quantity of transmissions R2 = 2, the UE determines that the quantity of PRACH transmissions R3 is 4 before the second RA attempt. If the second RA attempt fails, the RA procedure ends or the UE maintains the quantity of PRACH transmissions as R3 = 4 and performs up to two more RA attempts.

It is assumed that the network side configures or the protocol agrees that the quantity of PRACH transmissions R1 may be used for up to four RA attempts, the quantity of PRACH transmissions R2 may be used for up to two RA attempts, and the quantity of PRACH transmissions R3 may be used for up to one RA attempt. The UE first attempts up to 2 times as the quantity of transmissions R2 = 2. If the attempt fails, the UE re-determines the quantity of PRACH transmissions. It is assumed that the quantity of PRACH transmissions is determined to be R1 based on the comparation of the measurement value with the threshold, up to 2 RA attempts are made as based on R1. If 2 RA attempts still fail, the RA procedure ends. It is assumed that the quantity of PRACH transmissions R3 re-determined based on ascending of the previous quantity of PRACH transmissions is 4, the RA procedure ends if one RA attempt fails as based on R3.

### Example 3

Before the first RA attempt in an RA procedure, for example, during the RA initialization procedure and/or random access resource selection procedure, the UE determines a quantity of PRACH transmissions, and both the quantity of PRACH transmissions is used for each RA attempt in the RA procedure. The UE determines SSB or CSI-RS before the first RA attempt and after the quantity of RA attempts reaches the second value, and the SSB or CSI-RS is applicable to the next RA attempt before the SSB or CSI-RS is determined by the UE. The method for determining the quantity of PRACH transmissions refers to Example 1.

The method for determining the SSB may be that the UE determines the SSB set before the first RA attempt, and the SSB set is used for all RA attempts in the RA procedure. The method for determining the SSB set refers to Example 1, and it is assumed that the SSB set includes {SSB2, SSB3}. Before the first RA attempt, the UE selects an SSB in the SSB set to perform RA attempts up to the second value. If the RA attempts fail, the UE re-selects an SSB in the SSB set for an attempt. For example, it is assumed that the second value is 1, before the first RA attempt, the UE selects, for example, SSB2 in the SSB set to perform an RA attempt. If the RA attempt fails, the UE re-selects, for example, SSB3 in the SSB set to perform an RA attempt again. If the RA attempt still fails and the maximum quantity of attempts configured by the network side is not reached, the UE continues to select, for example, SSB3 in the SSB set to perform an RA attempt until the RA attempt succeeds or the maximum quantity of attempts configured on the network side is reached.

The method for determining the SSB may also include determining, by the UE, the SSB set before the first RA attempt and in case that the second value is reached, and selecting the SSB from the latest determined SSB set each RA attempt. It is assumed that before the first RA attempt, the SSB set includes {SSB2, SSB3}, and the second value is 2. Before the first RA attempt, the UE selects an SSB from SSB2 and SSB3 for the first RA attempt. If the first RA attempt fails, the UE selects an SSB from SSB2 and SSB3 again for the second RA attempt. If the second RA attempt fails, the UE re-determines the SSB set in the same way as before the first RA attempt. It is assumed that the SSB includes {SSB3, SSB4}, the UE selects an SSB from SSB3 and SSB4 for a third RA attempt. If the third RA attempt fails, the UE selects an SSB from SSB3 and SSB4 for a fourth RA attempt, until the RA attempt succeeds or the maximum quantity of attempts configured on the network side is reached.

### Example 4

The UE determines the quantity of PRACH transmissions before the first RA attempt and after the quantity of RA attempts reaches the first value, and the quantity of PRACH transmissions is applicable to the next RA attempt before the UE redetermines the quantity of PRACH transmissions. The UE determines SSB or CSI-RS before the first RA attempt and after the quantity of RA attempts reaches the second value, and the SSB or CSI-RS is applicable to the next RA attempt before the SSB or CSI-RS is determined by the UE.

The SSB determined by the UE is one of the SSB sets, and the SSB set may be: an SSB set determined before the first RA attempt; or an SSB set redetermined after the first value is reached; or an SSB set redetermined after the second value is reached. The first value may be the same as or different from the second value.

It is assumed that both the first value and the second value are 1, the UE determines the quantity of PRACH transmissions and the SSB before each RA attempt. For example, it is assumed that the network side notifies two RSRP thresholds T₁ = 0 dBm and T₂ = -10 dBm and an RSRP threshold T_{SSB} = -5 dBm for SSB selection, it is assumed that the downlink path loss reference RSRP before the first RA attempt is -8 dBm, and the SS-RSRP corresponding to SSB1, SSB2, SSB3 and SSB4 are -15 dBm, -8 dBm, -7 dBm, and -13 dBm, respectively, then the UE determines that the quantity of PRACH transmissions for the first RA attempt is R2, and the SSB is one SSB in the set {SSB2, SSB3}. If the first RA attempt fails, the UE re-determines the quantity of PRACH transmissions and the SSB before the second RA attempt. It is assumed that the downlink path loss reference RSRP is -12 dBm at this time, since the RSRP of a downlink loss reference is less than T₂, the UE determines that the quantity of PRACH transmissions is R3. The SSB determined before the second RA attempt may be selected from the SSB set determined before the first RA attempt, that is, an SSB is determined from {SSB2, SSB3}, or the SSB set may be re-determined. For example, it is assumed that the SS-RSRPs corresponding to SSB1, SSB2, SSB3, and SSB4 before the second RA attempt are -18 dBm, -12 dBm, -13 dBm, and -17 dBm, respectively, and the UE selects one SSB from SSB1, SSB2, SSB3, and SSB4 since all SS-RSRPs are lower than T_{SSB}.

It is assumed that the first value is a value associated with the quantity of PRACH transmissions, and it is assumed that the first value corresponding to the quantity of PRACH transmissions R1 configured by the network side is 4, the first value corresponding to the quantity of PRACH transmissions R2 is 2, and the first value corresponding to the quantity of PRACH transmissions R3 is 1. The second value is fixed to 1.

It is assumed that the UE determines that the quantity of PRACH transmissions is R2 before the first RA attempt, and the SSB is SSB2 in the set {SSB2, SSB3}, the UE performs the first RA attempt based on the quantity of PRACH transmissions R2 and SSB2. If the first RA attempt fails, the quantity of attempts does not reach the first value at this time, but reaches the second value, the UE re-determines the SSB, and the quantity of PRACH transmissions remains unchanged. At this time, the SSB may be selected from the SSB set determined before the first RA attempt, for example, SSB3, or an SSB set may be re-determined and then the SSB may be selected from the re-determined SSB set. The UE performs a maximum of a second RA attempt based on the re-determined quantity of PRACH transmissions and the re-selected SSB. If the second RA attempt fails, the first value and the second value are reached at this time, and the UE re-determines the quantity of PRACH transmissions and the SSB. The SSB may be selected from the SSB set determined before the first RA attempt, for example, SSB3, or the SSB set may be re-determined and then the SSB may be selected. It is assumed that the SSB set at this time is {SSB4, SSB5}, and the UE selects SSB4, the UE performs a third RA attempt based on the re-determined quantity of PRACH transmissions and SSB4. If the third RA attempt fails, the first value is not reached at this time, but the second value is reached, the UE re-determines the SSB, and the quantity of PRACH transmissions remains unchanged. At this time, the SSB may be selected from the SSB set determined before the first RA attempt, or from the SSB set determined before the third RA attempt, or the SSB set is re-determined and the SSB is selected.

In the method for determining random access resource provided in the embodiment of the present application, the terminal determines the random access resource for the current random access attempt based on the quantity of PRACH transmissions and the reference signal for the current random access attempt by determining the quantity of PRACH transmissions and the reference signal for the current random access attempt, and transmits the PRACH in the current random access attempt on the random access resource, which clarifies a scheme of how to determine the random access resource after multiple PRACH transmissions are supported in NR, determines the quantity of PRACH transmissions and the reference signal for the current random access attempt during the random access procedure, and is more suitable for terminals moving at medium and high speeds.

FIG. 2 is a schematic structural diagram of a terminal according to an embodiment of the present application. As shown in FIG. 2, the terminal includes a memory 201, a transceiver 202, and a processor 203, where
the memory 201 is used to store a computer program; the transceiver 202 is used to transmit and receive data under control of the processor 203.

In an embodiment, the transceiver 202 is used for receiving and transmitting data under control of the processor 203.

In FIG. 2, a bus architecture may include any quantity of interconnected buses and bridges, which are linked together through various circuits of one or more processors represented by processor 203 and one or more memories represented by the memory 201. The bus architecture may also link together various other circuits, such as peripherals, voltage regulators, and power management circuits, which are well known in the art, and therefore will not be further described in the present application. The bus interface provides an interface. The transceiver 202 may be multiple elements, i.e., including a transmitter and a receiver, units for providing communication with various other devices over transmission media including wireless channels, wired channels, fiber optic cables, and the like. For different user equipment, the user interface 204 may also be an interface capable of externally or internally connecting the required equipment, and the connected equipment includes, but not limited to, a keypad, a display, a speaker, a microphone, a joystick, and the like.

The processor 203 is responsible for managing the bus architecture and general processing, and the memory 201 may store data used by the processor 203 when performing operations.

The processor 203 may be a central processing unit (CPU), an application specific integrated circuit (ASIC), a field-programmable gate array (FPGA), or a complex programmable logic device (CPLD), the processor can also use a multi-core architecture.

The processor is configured to perform any one of the methods of the embodiments of the present application based on the obtained executable instructions by invoking the computer program stored in the memory. The processor and memory may also be physically separated.

The processor 203 is used for reading the computer program in the memory 201 and perform the following operations:
determining a quantity of physical random access channel (PRACH) transmissions and a reference signal for a current random access attempt; and
determining a random access resource for the current random access attempt based on the quantity of PRACH transmissions and the reference signal for the current random access attempt, and transmitting a PRACH in the current random access attempt on the random access resource.

In an embodiment, determining the quantity of PRACH transmissions for the current random access attempt includes:
determining a first quantity of PRACH transmissions before a first random access attempt, where the first quantity of PRACH transmissions is used for each random access attempt in a random access procedure; or
determining a second quantity of PRACH transmissions after a quantity of random access attempts reaches a first value, where the second quantity of PRACH transmissions is used for each random access attempt before next determination of a quantity of PRACH transmissions in the random access procedure; or
determining the first quantity of PRACH transmissions or the second quantity of PRACH transmissions as the quantity of PRACH transmissions for the current random access attempt.

In an embodiment, determining the reference signal for the current random access attempt includes:
determining a first reference signal before the first random access attempt, where the first reference signal is used for each random access attempt in a random access procedure; or
determining a second reference signal after the quantity of random access attempts reaches a second value, where the second reference signal is used for each random access attempt before next determination of a reference signal in the random access procedure;
determining the first reference signal or the second reference signal as the reference signal for the current random access attempt.

In an embodiment, determining the first quantity of PRACH transmissions includes:
determining the first quantity of PRACH transmissions based on a relationship between a signal measurement value and a threshold; or
determining the first quantity of PRACH transmissions based on indication information transmitted from a network device.

In an embodiment, the second quantity of PRACH transmissions is determined based on the following steps:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

In an embodiment, the predefined rule includes:
the second quantity of PRACH transmissions is a minimum value among all values in a set of quantity of PRACH transmissions that are greater than a quantity of PRACH transmissions corresponding to a previous random access attempt in the random access procedure.

In an embodiment, the first reference signal and the second reference signal are reference signals in a reference signal set.

In an embodiment, the reference signal set is determined before the first random access attempt, and the reference signal set is used for each random access attempt in the random access procedure.

In an embodiment, the reference signal set is determined after the quantity of random access attempts reaches a third value, and the reference signal set is used for each random access attempt before the reference signal set is determined next time in the random access procedure.

In an embodiment, the third value is the same as at least one of the first value or the second value.

In an embodiment, the reference signals in the reference signal set include:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
   reference signal received power;
   reference signal received quality;
   signal-to-noise ratio;
   signal-to-interference-plus-noise ratio; or
   received signal strength indication.

In an embodiment, the reference signal is one or more synchronization signal (SS) blocks, or one or more channel state information reference signals.

In an embodiment, the quantity of the reference signals is associated with whether a same beam is used for multiple PRACH transmissions in the current random access attempt.

It should be noted here that the above-mentioned terminal according to the embodiments of the present application can implement all the method steps implemented by the above-mentioned method embodiments, and can achieve the same effect. The same parts and beneficial effects as the same method embodiments will not be repeated here.

FIG. 3 is a schematic structural diagram of an apparatus for determining random access resource according to an embodiment of the present application. As shown in FIG. 3, the apparatus includes:
a first determining unit 301, used for determining a quantity of physical random access channel (PRACH) transmissions and a reference signal for a current random access attempt; and
a second determining unit 302, used for determining a random access resource for the current random access attempt based on the quantity of PRACH transmissions and the reference signal for the current random access attempt, and transmitting a PRACH in the current random access attempt on the random access resource.

In an embodiment, the first determining unit includes:
a first determining module, used for determining a first quantity of PRACH transmissions before a first random access attempt, where the first quantity of PRACH transmissions is used for each random access attempt in a random access procedure; or
a second determining module, used for determining a second quantity of PRACH transmissions after a quantity of random access attempts reaches a first value, where the second quantity of PRACH transmissions is used for each random access attempt before next determination of a quantity of PRACH transmissions in the random access procedure; or
a third determining module, used for determining the first quantity of PRACH transmissions or the second quantity of PRACH transmissions as the quantity of PRACH transmissions for the current random access attempt.

In an embodiment, the first determining unit includes:
a fourth determining module, used for determining a first reference signal before the first random access attempt, where the first reference signal is used for each random access attempt in a random access procedure; or
a fifth determining module, used for determining a second reference signal after the quantity of random access attempts reaches a second value, where the second reference signal is used for each random access attempt before next determination of a reference signal in the random access procedure;
a sixth determining module, used for determining the first reference signal or the second reference signal as the reference signal for the current random access attempt.

In an embodiment, the first determining module is used for:
determining the first quantity of PRACH transmissions based on a relationship between a signal measurement value and a threshold; or
determining the first quantity of PRACH transmissions based on indication information transmitted from a network device.

In an embodiment, the second determining module is used for:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

In an embodiment, the predefined rule includes:
the second quantity of PRACH transmissions is a minimum value among all values in a set of quantity of PRACH transmissions that are greater than a quantity of PRACH transmissions corresponding to a previous random access attempt in the random access procedure.

In an embodiment, the first reference signal and the second reference signal are reference signals in a reference signal set.

In an embodiment, the reference signal set is determined before the first random access attempt, and the reference signal set is used for each random access attempt in the random access procedure.

In an embodiment, the reference signal set is determined after the quantity of random access attempts reaches a third value, and the reference signal set is used for each random access attempt before the reference signal set is determined next time in the random access procedure.

In an embodiment, the third value is the same as at least one of the first value or the second value.

In an embodiment, the reference signals in the reference signal set include:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
   reference signal received power;
   reference signal received quality;
   signal-to-noise ratio;
   signal-to-interference-plus-noise ratio; or
   received signal strength indication.

In an embodiment, the reference signal is one or more synchronization signal (SS) blocks, or one or more channel state information reference signals.

In an embodiment, the quantity of the reference signals is associated with whether a same beam is used for multiple PRACH transmissions in the current random access attempt.

The methods and the apparatuses provided by the embodiments of the present application are based on the same concept, the implementation of the apparatuses and the methods can be referred to each other d since the principles of the methods and the apparatuses are similar, and the repetition will not be repeated.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network side device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or a compact disk.

It should be noted here that the above-mentioned apparatus according to the embodiments of the present application can implement all the method steps implemented by the above-mentioned method embodiments, and can achieve the same effect. The same parts and beneficial effects as the same method embodiments will not be repeated here.

An embodiment of the present application further provides a processor-readable storage medium having stored thereon a computer program that cause a processor to perform methods for determining a random access resource, provided by embodiments described above, which, for example, includes:
determining a quantity of physical random access channel (PRACH) transmissions and a reference signal for a current random access attempt; and
determining a random access resource for the current random access attempt based on the quantity of PRACH transmissions and the reference signal for the current random access attempt, and transmitting a PRACH in the current random access attempt on the random access resource.

The computer readable storage medium can be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for determining random access resource, including:
determining a quantity of physical random access channel (PRACH) transmissions and a reference signal for a current random access attempt; and
determining a random access resource for the current random access attempt based on the quantity of PRACH transmissions and the reference signal for the current random access attempt, and transmitting a PRACH in the current random access attempt on the random access resource.

2. The method of claim 1, wherein determining the quantity of PRACH transmissions for the current random access attempt comprises:
determining a first quantity of PRACH transmissions before a first random access attempt, wherein the first quantity of PRACH transmissions is used for each random access attempt in a random access procedure; or
determining a second quantity of PRACH transmissions after a quantity of random access attempts reaches a first value, wherein the second quantity of PRACH transmissions is used for each random access attempt before next determination of a quantity of PRACH transmissions in the random access procedure;
determining the first quantity of PRACH transmissions or the second quantity of PRACH transmissions as the quantity of PRACH transmissions for the current random access attempt.

3. The method of claim 2, wherein determining the reference signal for the current random access attempt comprises:
determining a first reference signal before the first random access attempt, wherein the first reference signal is used for each random access attempt in a random access procedure; or
determining a second reference signal after the quantity of random access attempts reaches a second value, wherein the second reference signal is used for each random access attempt before next determination of a reference signal in the random access procedure;
determining the first reference signal or the second reference signal as the reference signal for the current random access attempt.

4. The method of claim 2, wherein determining the first quantity of PRACH transmissions comprises:
determining the first quantity of PRACH transmissions based on a relationship between a signal measurement value and a threshold; or
determining the first quantity of PRACH transmissions based on indication information transmitted from a network device.

5. The method of claim 2, wherein the second quantity of PRACH transmissions is determined based on the following steps:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

6. The method of claim 5, wherein the predefined rule comprises:
the second quantity of PRACH transmissions is a minimum value among all values in a set of quantity of PRACH transmissions that are greater than a quantity of PRACH transmissions corresponding to a previous random access attempt in the random access procedure.

7. The method of claim 3, wherein the first reference signal and the second reference signal are reference signals in a reference signal set.

8. The method of claim 7, wherein the reference signal set is determined before the first random access attempt, and the reference signal set is used for each random access attempt in the random access procedure.

9. The method of claim 7, wherein the reference signal set is determined after the quantity of random access attempts reaches a third value, and the reference signal set is used for each random access attempt before the reference signal set is determined next time in the random access procedure.

10. The method of claim 9, wherein the third value is the same as at least one of the first value or the second value.

11. The method of claim 7, wherein the reference signals in the reference signal set comprises:
N reference signals with a highest signal measurement value, wherein N is a predefined or preconfigured positive integer; or
all or part of reference signals having signal measurement values within a signal measurement value range corresponding to the quantity of PRACH transmissions; or
all or part of the reference signals having signal measurement values greater than a threshold;
the signal measurement value comprises at least one of the following:
reference signal received power;
reference signal received quality;
signal-to-noise ratio;
signal-to-interference-plus-noise ratio; or
received signal strength indication.

12. The method of claim 1, wherein the reference signal is one or more synchronization signal blocks, or one or more channel state information reference signals.

13. The method of claim 12, wherein the quantity of the reference signals is associated with whether a same beam is used for multiple PRACH transmissions in the current random access attempt.

14. A terminal, comprising a memory, a transceiver and a processor,
wherein the memory is used for storing a computer program; the transceiver is used for receiving and sending data under control of the processor; and the processor is used for reading the computer program in the memory and performing the following operations:
determining a quantity of physical random access channel (PRACH) transmissions and a reference signal for a current random access attempt; and
determining a random access resource for the current random access attempt based on the quantity of PRACH transmissions and the reference signal for the current random access attempt, and transmitting a PRACH in the current random access attempt on the random access resource.

15. The terminal of claim 14, wherein determining the quantity of PRACH transmissions for the current random access attempt comprises:
determining a first quantity of PRACH transmissions before a first random access attempt, wherein the first quantity of PRACH transmissions is used for each random access attempt in a random access procedure; or
determining a second quantity of PRACH transmissions after a quantity of random access attempts reaches a first value, wherein the second quantity of PRACH transmissions is used for each random access attempt before next determination of a quantity of PRACH transmissions in the random access procedure;
determining the first quantity of PRACH transmissions or the second quantity of PRACH transmissions as the quantity of PRACH transmissions for the current random access attempt.

16. The terminal of claim 15, wherein determining the reference signal for the current random access attempt comprises:
determining a first reference signal before the first random access attempt, where the first reference signal is used for each random access attempt in a random access procedure; or
determining a second reference signal after the quantity of random access attempts reaches a second value, where the second reference signal is used for each random access attempt before next determination of a reference signal in the random access procedure;
determining the first reference signal or the second reference signal as the reference signal for the current random access attempt.

17. The terminal of claim 15, wherein determining the first quantity of PRACH transmissions comprises:
determining the first quantity of PRACH transmissions based on a relationship between a signal measurement value and a threshold; or
determining the first quantity of PRACH transmissions based on indication information transmitted from a network device.

18. The terminal of claim 15, wherein the second quantity of PRACH transmissions is determined based on the following steps:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

19. The terminal of claim 18, wherein the predefined rule comprises:
the second quantity of PRACH transmissions is a minimum value among all values in a set of quantity of PRACH transmissions that are greater than a quantity of PRACH transmissions corresponding to a previous random access attempt in the random access procedure.

20. The terminal of claim 16, wherein the first reference signal and the second reference signal are reference signals in a reference signal set.

21. The terminal of claim 20, wherein the reference signal set is determined before the first random access attempt, and the reference signal set is used for each random access attempt in the random access procedure.

22. The terminal of claim 20, wherein the reference signal set is determined after the quantity of random access attempts reaches a third value, and the reference signal set is used for each random access attempt before the reference signal set is determined next time in the random access procedure.

23. The terminal of claim 22, wherein the third value is the same as at least one of the first value or the second value.

24. The terminal of claim 20, wherein the reference signals in the reference signal set comprises:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
reference signal received power;
reference signal received quality;
signal-to-noise ratio;
signal-to-interference-plus-noise ratio; or
received signal strength indication.

25. The terminal of claim 14, wherein the reference signal is one or more synchronization signal blocks, or one or more channel state information reference signals.

26. The terminal of claim 25, wherein the quantity of the reference signals is associated with whether a same beam is used for multiple PRACH transmissions in the current random access attempt.

27. An apparatus for determining random access resource, comprising:
a first determining unit, used for determining a quantity of physical random access channel (PRACH) transmissions and a reference signal for a current random access attempt; and
a second determining unit, used for determining a random access resource for the current random access attempt based on the quantity of PRACH transmissions and the reference signal for the current random access attempt, and transmitting a PRACH in the current random access attempt on the random access resource.

28. The apparatus of claim 27, wherein the first determining unit comprises:
a first determining module, used for determining a first quantity of PRACH transmissions before a first random access attempt, where the first quantity of PRACH transmissions is used for each random access attempt in a random access procedure; or
a second determining module, used for determining a second quantity of PRACH transmissions after a quantity of random access attempts reaches a first value, where the second quantity of PRACH transmissions is used for each random access attempt before next determination of a quantity of PRACH transmissions in the random access procedure;
a third determining module, used for determining the first quantity of PRACH transmissions or the second quantity of PRACH transmissions as the quantity of PRACH transmissions for the current random access attempt.

29. The apparatus of claim 28, wherein the first determining unit comprises:
a fourth determining module, used for determining a first reference signal before the first random access attempt, where the first reference signal is used for each random access attempt in a random access procedure; or
a fifth determining module, used for determining a second reference signal after the quantity of random access attempts reaches a second value, where the second reference signal is used for each random access attempt before next determination of a reference signal in the random access procedure;
a sixth determining module, used for determining the first reference signal or the second reference signal as the reference signal for the current random access attempt.

30. The apparatus of claim 28, wherein the first determining module is used for:
determining the first quantity of PRACH transmissions based on a relationship between a signal measurement value and a threshold; or
determining the first quantity of PRACH transmissions based on indication information transmitted from a network device.

31. The apparatus of claim 28, wherein the second determining module is used for:
determining the second quantity of PRACH transmissions based on a relationship between a signal measurement value and a threshold; or
determining the second quantity of PRACH transmissions based on indication information transmitted from a network device; or
determining the second quantity of PRACH transmissions based on a predefined rule.

32. The apparatus of claim 31, wherein the predefined rule comprises:
the second quantity of PRACH transmissions is a minimum value among all values in a set of quantity of PRACH transmissions that are greater than a quantity of PRACH transmissions corresponding to a previous random access attempt in the random access procedure.

33. The apparatus of claim 29, wherein the first reference signal and the second reference signal are reference signals in a reference signal set.

34. The apparatus of claim 33, wherein the reference signal set is determined before the first random access attempt, and the reference signal set is used for each random access attempt in the random access procedure.

35. The apparatus of claim 33, wherein the reference signal set is determined after the quantity of random access attempts reaches a third value, and the reference signal set is used for each random access attempt before the reference signal set is determined next time in the random access procedure.

36. The apparatus of claim 35, wherein the third value is the same as at least one of the first value or the second value.

37. The apparatus of claim 33, wherein the reference signals in the reference signal set comprises:
N reference signals with a highest signal measurement value, where N is a predefined or preconfigured positive integer; or
all or part of reference signals having signal measurement values within a signal measurement value range corresponding to a quantity of PRACH transmissions; or
all or part of the reference signals having signal measurement values greater than a threshold;
the signal measurement value includes at least one of the following:
reference signal received power;
reference signal received quality;
signal-to-noise ratio;
signal-to-interference-plus-noise ratio; or
received signal strength indication.

38. The apparatus of claim 27, wherein the reference signal is one or more synchronization signal blocks, or one or more channel state information reference signals.

39. The apparatus of claim 38, wherein the quantity of the reference signals is associated with whether a same beam is used for multiple PRACH transmissions in the current random access attempt.

40. A computer-readable storage medium, wherein the computer-readable storage medium stores a computer program, and the computer program causes a computer to perform the method of any of claims 1 to 13.
